# EUROPEAN PATENT APPLICATION

(11) **EP 4 380 280 A1**
(43) Date of publication of application: **05.06.2024**
(21) Application number: 21951172.2
(22) Date of filing: 26.07.2021
(51) Int. Cl.: H04W 72/12

(54) **SERVICE CONTROL METHOD AND APPARATUS, USER EQUIPMENT, BASE STATION, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2021/108502
(87) International publication number: WO 2023/004554

(57) **Abstract**

The present disclosure relates to the technical field of communications, and provides a service control method and apparatus, a user equipment, a base station, and a storage medium. The method comprises: transmitting priority configuration information to a base station, the priority configuration information being used for indicating a priority between a small data transmission (SDT) service and other services; in the process of executing the SDT service, determining a scheduling indication transmitted by the base station and used for scheduling other services; and on the basis of the priority configuration information and the scheduling indication, determining whether to continue to execute the SDT service. According to the method provided by the present disclosure, when the SDT service conflicts with other services, the service having a higher priority is preferentially executed, and thus, a service process having a higher priority can be retained, and the loss of data of the service having the higher priority is avoided.

## Description

### TECHNICAL FIELD

The present disclosure relates to a communication technical field, and more particularly to a method for controlling a service, an apparatus for controlling a service, a user equipment, a base station and a storage medium.

### BACKGROUND

In communication systems, a user equipment (UE), i.e., a terminal device generally performs small data transmission (SDT) during the initial access process to improve data transmission efficiency. In the process of UE performing the SDT service, the UE may receive a paging message sent by a base station. The paging message will also trigger the random access process to enable the UE to perform the paging service. At this time, the SDT service will conflict with the paging service.

In a related art, when the SDT service conflicts with the paging service, the SDT service will be interrupted or abandoned, so that information data in the SDT service easily loses.

### SUMMARY

The present disclosure provides a method for controlling a service, an apparatus for controlling a service, a user equipment, a base station and a storage medium, so as to solve the technical problem in the related art that easily leads to data loss of SDT service when the SDT service conflicts with other services.

In an aspect, embodiments of the present disclosure provide a method for controlling a service, performed by a user equipment (UE) and including:
obtaining priority configuration information, wherein the priority configuration information is configured to indicate priorities of a small data transmission (SDT) service and of other services;
determining a scheduling indication sent by a base station for scheduling the other services in a process of performing the SDT service; and
determining whether to continue performing the SDT service based on the priority configuration information and the scheduling indication.

In another aspect, embodiments of the present disclosure provide a method for controlling a service, performed by a base station and including:
sending priority configuration information to a user equipment (UE), wherein the priority configuration information is configured to indicate priorities of a small data transmission (SDT) service and of other services; and
performing the SDT service.

In another aspect, embodiments of the present disclosure provide an apparatus for receiving a signal including:
a receiving module configured to obtain priority configuration information, wherein the priority configuration information is configured to indicate priorities of a small data transmission (SDT) service and of other services; and
a processing module configured to determine a scheduling indication sent by a base station for scheduling the other services in a process of performing the SDT service;
wherein the processing module is further configured to determine whether to continue performing the SDT service based on the priority configuration information and the scheduling indication.

In another aspect, embodiments of the present disclosure provide an apparatus for receiving a signal including:
a sending module configured to send priority configuration information to a user equipment (UE), wherein the priority configuration information is configured to indicate priorities of a small data transmission (SDT) service and of other services; and
a processing module configured to perform the SDT service.

In another aspect, embodiments of the present disclosure provide a communication device. The device includes a processor and a memory. A computer program is stored in the memory, and the processor executes the computer program stored in the memory to cause the device to execute the method according to any one of embodiments in the above-mentioned aspect.

In another aspect, embodiments of the present disclosure provide a communication device. The device includes a processor and a memory. A computer program is stored in the memory, and the processor executes the computer program stored in the memory to cause the device to execute the method according to any one of embodiments in another aspect.

In another aspect, embodiments of the present disclosure provide a communication device including a processor and an interface circuit.

The interface circuit is configured to receive code indications and transmit the code indications to the processor;
the processor is configured to run the code indications to perform the method according to any one of embodiments in the above-mentioned aspect.

In another aspect, embodiments of the present disclosure provide a communication device including a processor and an interface circuit.

The interface circuit is configured to receive code indications and transmit the code indications to the processor;
the processor is configured to run the code indications to perform the method according to any one of embodiments in another aspect.

In another aspect, embodiments of the present disclosure provide a computer-readable storage medium for storing indications. When the indications are executed, the method according to any one of embodiments in the above-mentioned aspect is implemented.

In another aspect, embodiments of the present disclosure provide a computer-readable storage medium for storing indications. When the indications are executed, the method according to any one of embodiments in another aspect is implemented.

To sum up, in the method for controlling the service, the apparatus for controlling the service, the user equipment, the base station and the storage medium provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

Additional aspects and advantages of the present disclosure will be set forth in part in the description which follows, and in part will be obvious from the description, or may be learned by practice of the disclosure.

### BRIEF DESCRIPTION OF THE DRAWINGS

These above-mentioned and/or additional aspects and advantages of embodiments of the present disclosure will become apparent and more readily appreciated from the following descriptions made with reference to the drawings, in which:

These above-mentioned and/or additional aspects and advantages of embodiments of the present disclosure will become apparent and more readily appreciated from the following descriptions made with reference to the drawings, in which:
FIG. 1 is a schematic flowchart of a method for controlling a service provided by an embodiment of the present disclosure;
FIG. 2 is a schematic flowchart of another method for controlling a service provided by an embodiment of the present disclosure;
FIG. 3 is a schematic flowchart of another method for controlling a service provided by an embodiment of the present disclosure;
FIG. 4 is a schematic flowchart of another method for controlling a service provided by an embodiment of the present disclosure;
FIG. 5 is a schematic flowchart of another method for controlling a service provided by an embodiment of the present disclosure;
FIG. 6 is a schematic flowchart of another method for controlling a service provided by an embodiment of the present disclosure;
FIG. 7 is a schematic flowchart of another method for controlling a service provided by an embodiment of the present disclosure;
FIG. 8 is a schematic flowchart of another method for controlling a service provided by an embodiment of the present disclosure;
FIG. 9 is a schematic flowchart of another method for controlling a service provided by an embodiment of the present disclosure;
FIG. 10 is a schematic flowchart of another method for controlling a service provided by an embodiment of the present disclosure;
FIG. 11 is a schematic flowchart of another method for controlling a service provided by an embodiment of the present disclosure;
FIG. 12 is a schematic flowchart of another method for controlling a service provided by an embodiment of the present disclosure;
FIG. 13 is a schematic diagram of an apparatus for controlling a service provided by an embodiment of the present disclosure;
FIG. 14 is a schematic diagram of another apparatus for controlling a service provided by an embodiment of the present disclosure;
FIG. 15 is a block diagram of a user equipment provided by an embodiment of the present disclosure;
FIG. 16 is a block diagram of a base station provided by an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the disclosure as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It is understood that, although terms such as "first," "second" and "third" are used herein for describing various information, these information should not be limited by these terms. These terms are only used for distinguishing information of the same type. For example, first information may also be called second information, and similarly, the second information may also be called the first information, without departing from the scope of the present disclosure. As used herein, the term "if' may be construed to mean "when" or "upon" or "in response to determining" depending on the context.

Embodiments of the present disclosure are described in detail below, examples of which are illustrated in the drawings. The same or similar elements are denoted by same reference numerals in different drawings unless indicated otherwise. The embodiments described herein with reference to drawings are illustrative, used to understand the present disclosure, and shall not be construed to limit the present disclosure.

In a method for controlling a service, an apparatus for controlling a service, a user equipment, a base station and a storage medium provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

The method for controlling the service, the apparatus for controlling the service, the user equipment, the base station and the storage medium provided by embodiments of the present disclosure are described in detail below with reference to the accompanying drawings.

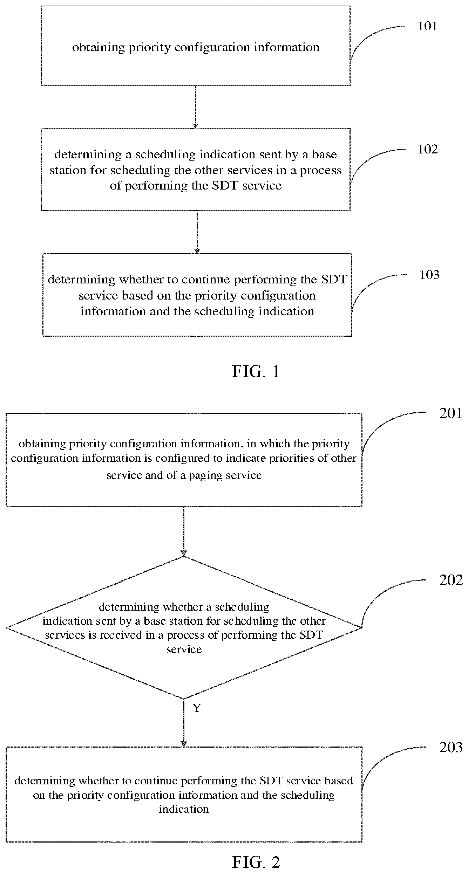

FIG. 1 is a schematic flowchart of a method for controlling a service provided by an embodiment of the present disclosure. The method is performed by a UE. As shown in FIG. 1, the method for controlling a service may include the following steps.

In step 101, priority configuration information is obtained.

It is noted that the method for controlling the service in embodiments of the present disclosure may be applied to any UE. The UE may refer to a device that provides voice and/or data connectivity to users. The UE may communicate with one or more core networks via radio access network (RAN). The UE may be a user equipment of an Internet of Things (IoT), such as a sensor device, a mobile phone (or called a cellular phone) and computers with IoT user equipment. For example, the user equipment may be fixed, portable, pocket, hand-held, computer built-in or vehicle-mounted devices. For example, the user equipment may be a station (STA), a subscriber unit, a subscriber station, a mobile station, a mobile, a remote station, an access point, a remote terminal, an access terminal, a user terminal, or a user agent. Alternatively, the UE may also be equipment of an unmanned aerial vehicle. Alternatively, the UE may also be a vehicle-mounted device, for example, a trip computer with a wireless communication function, or a wireless user equipment connected externally to the trip computer. Alternatively, the UE may also be a roadside device, for example, may be a street lamp, a signal lamp, or other roadside devices with a wireless communication function.

In an embodiment of the present disclosure, the priority configuration information may be configured to indicate priorities of the SDT service and of other services. In an embodiment of the present disclosure, the other service may be a paging service. For example, in an embodiment of the present disclosure, the paging service may be a mobile terminated (MT) service.

In addition, in an embodiment of the present disclosure, the method for the UE to obtain the priority configuration information may include obtaining the priority configuration information sent by the base station.

In another embodiment of the present disclosure, a method for the UE to obtain the priority configuration information may include determining the priority configuration information based on a protocol.

Furthermore, in an embodiment of the present disclosure, before performing the SDT service, the UE may also obtain the SDT resource configuration, and the UE may correspondingly perform the SDT service based on the SDT resource configuration.

In an embodiment of the present disclosure, the SDT resource configuration may specifically include at least one of the following:
a service process type of SDT service;
a bearing type corresponding to the SDT service;
a bearing identifier corresponding to the SDT service;
a performing phase corresponding to the SDT service.

Specifically, in an embodiment of the present disclosure, the above-mentioned service process type of SDT service may include at least one of the following:
4-step random access channel (4-step RACH) SDT; i.e., performing SDT in 4-step RACH process;
2-step random access channel (2-step RACH) SDT; i.e., performing SDT in 2-step RACH process; or
configure grant (CG) SDT. The CG SDT service process may be: performing SDT on an exclusive physical uplink shared channel (PUSCH) resource configured in the base station (such as CG resources and/or pre-allocated uplink resource (PUR).

In an embodiment of the present disclosure, the bearing type corresponding to the above-mentioned SDT service may include at least one of the following:
a data radio bearer (DRB);
a signaling radio bearer (SRB);
a master cell group radio bearer (MCGRB);
a secondary cell group radio bearer (SCGRB); or
a split bear.

In an embodiment of the present disclosure, the bearing identifier corresponding to the above-mentioned SDT service may include at least one of the following:
DRB-1;
SRB-1.

In an embodiment of the present disclosure, the performing phase corresponding to the above-mentioned SDT service may include at least one of the following:
an initial data sending phase including starting from triggering the SDT service to initially send data to receiving confirmation information for initially sent data from the base station;
a subsequent data sending phase including starting from receiving the confirmation information for initially sent data from the base station to receiving a connection release message sent by the base station.

It is noted that, in an embodiment of the present disclosure, for the above-mentioned initial data sending phase, when the service process types of the SDT service are different, the ways of determining receipt of the confirmation information are also different.

Specifically, in an embodiment of the present disclosure, if the service process type of the SDT service is a 4-step RACH SDT service process, when a contention resolution identifier of Msg4 is received, it is determined that the confirmation information for initially sent data from the base station is received.

In another embodiment of the present disclosure, if the service process type of the SDT service is a 2-step RACH SDT service process, when receiving the contention resolution identifier of the MsgB, it is determined that the confirmation information for initially sent data from the base station is received.

In another embodiment of the present disclosure, if the service process type of the SDT service is a CG SDT service process, after the UE uses CG resources to send data, it will start a feedback timer (such as feedbackTimer) to monitor the feedback information sent by the base station. When receiving the data reception success indication sent by the base station (such as the acknowledgement (ACK) information indicated by the physical layer downlink control information (DCI), it is determined that the confirmation information for initially sent data from the base station is received.

Furthermore, in an embodiment of the present disclosure, the process for the UE to obtain the SDT resource configuration may include: receiving the SDT resource configuration sent by the base station.

In another embodiment of the present disclosure, the process for the UE to obtain the SDT resource configuration may include: determining the SDT resource configuration based on the protocol.

It is noted that in an embodiment of the present disclosure, when the UE receives the SDT resource configuration sent by the base station, if the service process type of the SDT service is different, the process of the base station sending the SDT resource configuration is also different.

Specifically, in an embodiment of the present disclosure, if the service process type of the SDT service is the 2-step RACH SDT service process or the 4-step RACH SDT service process, the UE may obtain the SDT resources configuration sent by the base station via the system message.

In another embodiment of the present disclosure, if the service process type of the SDT service is the CG SDT service process, the UE may obtain the SDT resource configuration sent by the base station via a paging radio resource control (RRC) release message.

Based on the above-mentioned content, in an embodiment of the present disclosure, after the UE receives the SDT resource configuration sent by the base station, the UE may perform the SDT service according to at least one of the service process type of the SDT service indicated by the SDT resource configuration, the bearing type corresponding to the SDT service, and the bearing identifier corresponding to the SDT service and the performing phase corresponding to the SDT service.

In step 102, a scheduling indication sent by a base station for scheduling the other services is determined in a process of performing the SDT service.

In step 103, it is determined whether to continue performing the SDT service based on the priority configuration information and the scheduling indication.

In an embodiment of the present disclosure, the priority configuration information may include: priority information of the SDT service being different from priority information of the paging service. For example, in an embodiment of the present disclosure, the priority configuration information may include: the priority information of the SDT service being higher than the priority information of the paging service. In another embodiment of the present disclosure, the priority configuration information may include: the priority information of the SDT service being lower than the priority information of the paging service.

In addition, in an embodiment of the present disclosure, in the proves of the UE performing the SDT service, if it determines that it has received a scheduling indication sent by the base station for scheduling other services, the UE may perform a higher-priority service based on the priority configuration information.

In addition, for a detailed description of how to determine that the scheduling indication sent by the base station for scheduling other services is received and how to determine whether to continue to execute the SDT service based on the priority configuration information and the scheduling indication, reference may be made on the description of subsequent embodiments, embodiments of the present disclosure will not be described in detail here.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

FIG. 2 is a schematic flowchart of a method for controlling a service provided by an embodiment of the present disclosure. The method is performed by a UE. As shown in FIG. 2, the method for controlling the service may include the following steps.

In step 201, priority configuration information is obtained. The priority configuration information is configured to indicate priorities of a small data transmission (SDT) service and a paging service.

The relevant introduction to the priority configuration information may be described above, and will not be described in detail here in embodiments of the present disclosure.

In step 202, in a process of performing the SDT service, it is determined whether a scheduling indication sent by a base station for scheduling the other services is received. When it is determined that the scheduling indication is received, step 203 is performed.

In an embodiment of the present disclosure, the process of determining whether the scheduling indication sent by the base station for scheduling other services is received may include the following steps.

In step 1, the scheduling information sent by the base station is received via a paging radio network temporary identity physical downlink control channel (P-RNTI PDCCH). The scheduling information is configured to indicate the UE to receive messages in a physical downlink shared channel (PDSCH). For example, in an embodiment of the present disclosure, the scheduling information may be DCI information.

In an embodiment of the present disclosure, the scheduling information may be specifically configured to indicate the UE to receive a short message or a paging RRC message.

In an embodiment of the present disclosure, the short message may be used to indicate system information changes. If the scheduling message indicates the UE to receive the short message, the UE will receive the short message at a paging occasion (PO) position, and after receiving the short message, the changed system information will be received based on the indications of the short message.

In an embodiment of the present disclosure, the paging RRC message may be used to trigger the paging service. If the scheduling message indicates the UE to receive the paging RRC message, the UE will receive the paging RRC message at the PO position, and after receiving the paging RRC message, if the UE's own identifier is indicated in the paging RRC message, the UE will trigger the random access process to perform the paging service.

In step 2, it is determined whether the scheduling information indicates a paging RRC message for triggering the paging service.

In step 3, when the paging RRC message is indicated in the scheduling information, it is determined that the base station schedules the paging RRC message for triggering the paging service via the P-RNTI PDCCH, thereby determining that the scheduling indication for scheduling other services has been received.

In another embodiment of the present disclosure, a process for determining whether a scheduling indication sent by a base station for scheduling other services is received may include the following steps.

In step a, the scheduling information sent by the base station is received via the P-RNTI PDCCH. The scheduling information may be configured to indicate the UE to receive messages in the PDSCH.

In step b, it is determined whether the short message is not indicated in the scheduling information.

In step c, when the short message is not indicated in the scheduling information, it is determined that the scheduling information indicates the paging RRC message, thereby determining that the scheduling indication for scheduling other services is received.

In step 203, it is determined whether to continue performing the SDT service based on the priority configuration information and the scheduling indications.

In an embodiment of the present disclosure, if it is determined in the above-mentioned step 202 that the scheduling indication sent by the base station for scheduling other services is received in the process of performing the SDT service, it may be determined that the SDT service conflicts with other services, there is a need to select a service with a higher priority in the SDT service and other services based on the priority configuration information to avoid to lost the data of the higher priority service.

The specific process of determining whether to continue performing the SDT service based on the priority configuration information and scheduling indications will be introduced in detail in subsequent embodiments.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

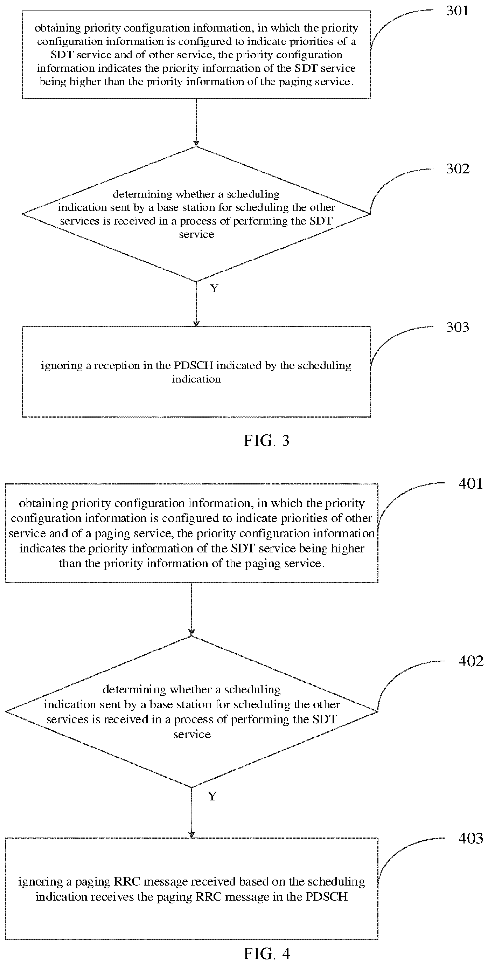

FIG. 3 is a schematic flowchart of a method for determining information provided by an embodiment of the present disclosure. The method is performed by a UE. As shown in FIG. 3, the method for controlling the service may include the following steps.

In step 301, priority configuration information is obtained. The priority configuration information is configured to indicate priorities of a SDT service and of other services. The priority configuration information indicates that the priority of the SDT service is higher than the paging service.

In step 302, in a process of performing the SDT service, it is determined whether a scheduling indication sent by the base station for scheduling other services is received. When it is determined that the scheduling indication is received, step 303 is performed.

Regarding steps 301 to 302, reference may be made on the above-mentioned description, and embodiments of the present disclosure will not be described in detail here.

In step 303, a reception in the PDSCH indicated by the scheduling indication is ignored.

In an embodiment of the present disclosure, if it is determined in step 302 that the scheduling indication sent by the base station for scheduling other services is received in the process of performing the SDT service, it is determined that the SDT service conflicts with other services. At this time, based on the priority of the SDT service being higher than the paging service, the paging service may be ignored and the SDT service may be continued.

In an embodiment of the present disclosure, a process of ignoring the paging service may include: ignoring the reception of the PDSCH indicated by the scheduling indication. Specifically, the reception of the PDSCH indicated by the scheduling information in the P-RNTI PDCCH is ignored. That is, even if the scheduling information sent by the base station via the P-RNTI PDCCH is received, the UE will not monitor the PDSCH based on the scheduling information to receive the message indicated by the scheduling information.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

FIG. 4 is a schematic flowchart of a method for controlling a service provided by an embodiment of the present disclosure. The method is performed by a UE. As shown in FIG. 4, the method for controlling the service may include the following steps.

In step 401, priority configuration information is obtained. The priority configuration information is configured to indicate priorities of a SDT service and of other services. The priority configuration information indicates the priority of the SDT service being higher than the priority of the paging service.

In step 402, in a process of performing the SDT service, it is determined whether a scheduling indication sent by the base station for scheduling other services is received. When it is determined that the scheduling indication is received, step 403 is performed.

Regarding steps 401 to 402, reference may be made on the above-mentioned description, and embodiments of the present disclosure will not be repeated here.

In step 403, a paging RRC message is received in the PDSCH based on the scheduling indication, and the paging RRC message received is ignored.

In an embodiment of the present disclosure, if it is determined in step 402 that the scheduling indication sent by the base station for scheduling other services is received in the process of performing the SDT service, it may be determined that the SDT service conflicts with other services. At this time, based on the priority of the SDT service being higher than the paging service, the paging service may be ignored and the SDT service may be continued.

In an embodiment of the present disclosure, the process of ignoring the paging service may include: ignoring the paging RRC message received. That is, after the UE receives the scheduling information sent by the base station via the P-RNTI PDCCH, the UE monitors the PDSCH based on the scheduling message, and when the UE receives the paging RRC message sent by the base station via the PDSCH, the UE ignores the received paging RRC message.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

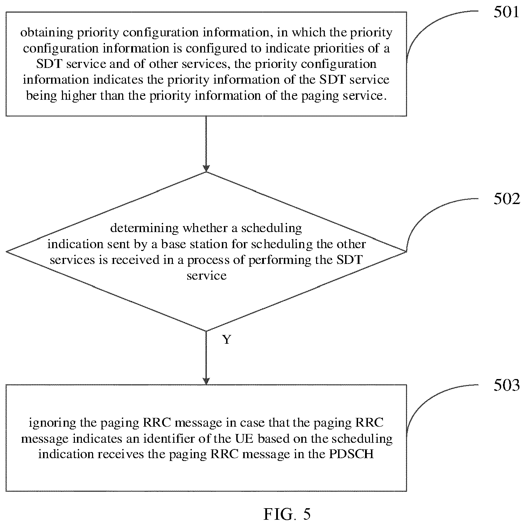

FIG. 5 is a schematic flowchart of a method for controlling a service provided by an embodiment of the present disclosure. The method is performed by a UE. As shown in FIG. 5, the method for controlling the service may include the following steps.

In step 501, priority configuration information is obtained. The priority configuration information is configured to indicate priorities of a SDT service and of other services. The priority configuration information indicates the priority of the SDT service being higher than the paging service.

In step 502, in a process of performing the SDT service, it is determined whether a scheduling indication sent by the base station for scheduling other services is received. When it is determined that the scheduling indication is received, step 503 is performed.

Regarding steps 501 to 502, reference may be made on the above-mentioned description, and the embodiments of the present disclosure will not be repeated here.

In step 503, a paging RRC message is received in the PDSCH based on the scheduling indication. If the paging RRC message indicates the identifier of the UE, the received paging RRC message is ignored.

In an embodiment of the present disclosure, if it is determined in step 502 that a scheduling indication sent by the base station for scheduling other services is received in a process of performing the SDT service, it may be determined that the SDT service conflicts with other services. At this time, based on the priority of the SDT service being higher than the paging service, the paging service may be ignored and the SDT service nay be continued.

In an embodiment of the present disclosure, the process of ignoring the paging service may include: ignoring the paging RRC message received in case that the paging RRC message indicates an identifier of the UE. That is, after receiving the scheduling information sent by the base station via the P-RNTI PDCCH, the UE monitors the PDSCH based on the scheduling message, and when receiving the paging RRC message sent by the base station via the PDSCH, it is determined whether the paging RRC message indicates the identifier of the UE. When the identifier of the UE is indicated, the paging RRC message received is ignored.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

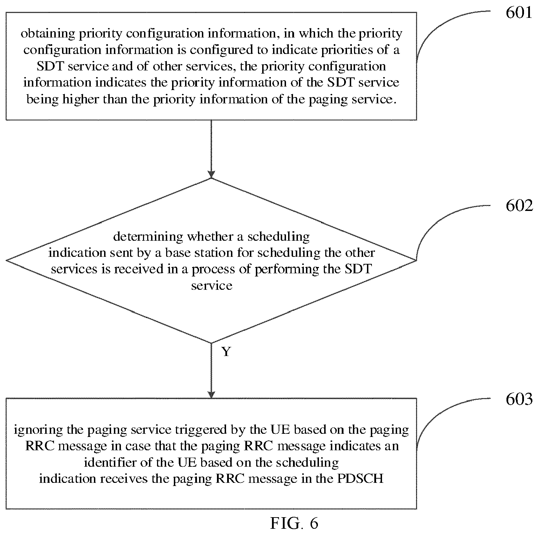

FIG. 6 is a schematic flowchart of a method for controlling a service provided by an embodiment of the present disclosure. The method is performed by a UE. As shown in FIG. 6, the method for controlling the service may include the following steps.

In step 601, priority configuration information is obtained. The priority configuration information is configured to indicate priorities of a SDT service and of other services. The priority configuration information indicates the priority of the SDT service being higher than the paging service.

In step 602, in a process of performing the SDT service, it is determined whether a scheduling indication sent by the base station for scheduling other services is received. When it is determined that the scheduling indication is received, step 603 is performed.

Regarding steps 601 to 602, reference may be made on the above-mentioned description, and the embodiments of the present disclosure will not be repeated here.

In step 603, a paging RRC message is received in the PDSCH based on the scheduling indication. If the paging RRC message indicates the identifier of the UE, the paging service triggered by the UE based on the paging RRC message is ignored.

In an embodiment of the present disclosure, if it is determined in step 602 that a scheduling indication sent by the base station for scheduling other services is received in a process of performing the SDT service, it may be determined that the SDT service conflicts with other services. At this time, based on the priority information of the SDT service being higher than the priority information of the paging service, the paging service may be ignored and the SDT service may be continued.

In an embodiment of the present disclosure, the process of ignoring the paging service may include: ignoring the paging service triggered by the UE based on the paging RRC message. That is, after receiving the scheduling information sent by the base station via the P-RNTI PDCCH, the UE monitors the PDSCH based on the scheduling message, and when receiving the paging RRC message sent by the base station through the PDSCH, it is determined whether the paging RRC message indicates the identifier of the UE. When the identifier of the UE is indicated, the random access process is not triggered based on the paging RRC message.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

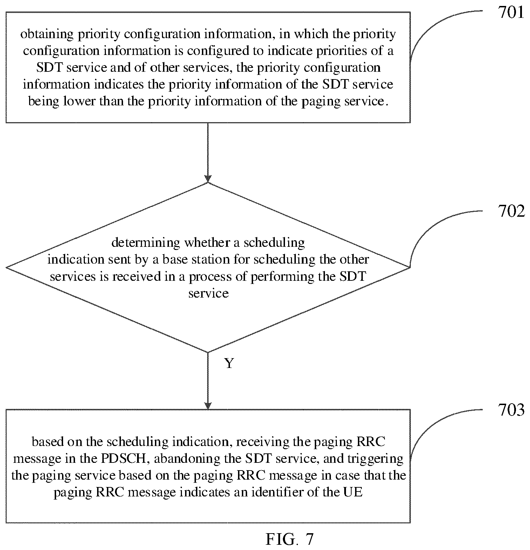

FIG. 7 is a schematic flowchart of a method for controlling a service provided by an embodiment of the present disclosure. The method is performed by a UE. As shown in FIG. 7, the method for controlling the service may include the following steps.

In step 701, priority configuration information is obtained. The priority configuration information is configured to indicate priorities of a SDT service and of other services. The priority configuration information indicates the priority information of the SDT service being lower than the priority information of the paging service.

In step 702, in a process of performing the SDT service, it is determined whether a scheduling indication sent by the base station for scheduling other services is received. When it is determined that the scheduling indication is received, step 703 is performed.

Regarding steps 701 to 702, reference may be made on the above-mentioned description, and the embodiments of the present disclosure will not be described in detail here.

In step 703, a paging RRC message is received in the PDSCH based on the scheduling indication. If the paging RRC message indicates the identifier of the UE, the SDT service is abandoned and the paging service is triggered based on the paging RRC message.

In an embodiment of the present disclosure, if it is determined in step 702 that a scheduling indication sent by the base station for scheduling other services is received in a process of performing the SDT service, it may be determined that the SDT service conflicts with other services. At this time, based on the priority of the SDT service being lower than the paging service, the SDT service may be directly abandoned/interrupted, and the paging service may be triggered based on the paging RRC message.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

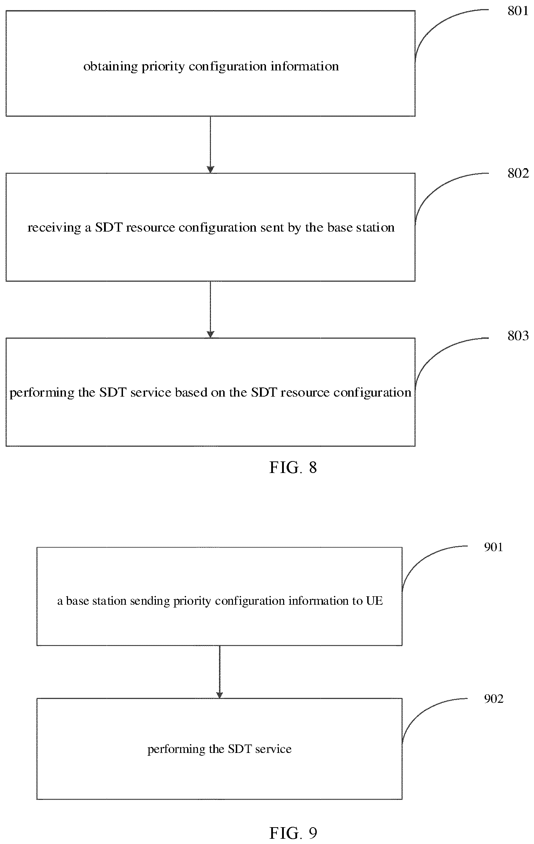

FIG. 8 is a schematic flowchart of a method for controlling a service provided by an embodiment of the present disclosure. The method is performed by a UE. As shown in FIG. 8, the method for controlling the service may include the following steps.

In step 801, priority configuration information is obtained.

In step 802, the SDT resource configuration sent by the base station is received.

In step 803, the SDT service is performed based on SDT resource configuration.

Regarding steps 801 to 803, reference may be made on the above-mentioned description, and the embodiments of the present disclosure will not be described in detail here.

To sum up, in the method for controlling the service provided by embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

FIG. 9 is a schematic flowchart of a method for controlling a service provided by an embodiment of the present disclosure. The method is performed by a base station. As shown in FIG. 9, the method for controlling the service may include the following steps.

In step 901, priority configuration information is sent to the UE.

In an embodiment of the present disclosure, the priority configuration information may be configured to indicate priorities of a SDT service and of other services. In an embodiment of the present disclosure, the other service may be a paging service. For example, in an embodiment of the present disclosure, the paging service may be an MT service.

Furthermore, in an embodiment of the present disclosure, before performing the SDT service, the base station may also send the SDT resource configuration to the UE, and the UE may correspondingly perform the SDT service based on the SDT resource configuration.

In an embodiment of the present disclosure, the SDT resource configuration may specifically include at least one of the following.
a service process type of SDT service;
a bearing type corresponding to the SDT service;
a bearing identifier corresponding to the SDT service;
a performing phase corresponding to the SDT service.

In an embodiment of the present disclosure, the above-mentioned service process type of SDT service may include at least one of the following:
4-step random access channel (4-step RACH) SDT; i.e., performing SDT in 4-step RACH process;
2-step random access channel (2-step RACH) SDT; i.e., performing SDT in 2-step RACH process; or
configure grant (CG) SDT. The CG SDT service process may be: performing SDT on an exclusive physical uplink shared channel (PUSCH) resource configured in the base station (such as CG resources and/or pre-allocated uplink resource (PUR).

In an embodiment of the present disclosure, the bearing type corresponding to the above-mentioned SDT service may include at least one of the following:
DRB;
SRB;
MCGRB;
SCGRB; or
a split bear.

In an embodiment of the present disclosure, the bearing identifier corresponding to the above-mentioned SDT service may include at least one of the following:
DRB-1;
SRB-1.

In an embodiment of the present disclosure, the performing phase corresponding to the above-mentioned SDT service may include at least one of the following:
an initial data sending phase including starting from triggering the SDT service to initially send data to receiving confirmation information for initially sent data from the base station;
a subsequent data sending phase including starting from receiving the confirmation information for initially sent data from the base station to receiving a connection release message sent by the base station.

It is noted that, in an embodiment of the present disclosure, for the above-mentioned initial data sending phase, when the service process types of the SDT service are different, the ways of determining receipt of the confirmation information are also different.

Specifically, in an embodiment of the present disclosure, if the service process type of the SDT service is a 4-step RACH SDT service process, when a contention resolution identifier of Msg4 is received, it is determined that the confirmation information for initially sent data from the base station is received.

In another embodiment of the present disclosure, if the service process type of the SDT service is a 2-step RACH SDT service process, when receiving the contention resolution identifier of the MsgB, it is determined that the confirmation information for initially sent data from the base station is received.

In another embodiment of the present disclosure, if the service process type of the SDT service is a CG SDT service process, after the UE uses CG resources to send data, it will start a feedback timer (such as feedbackTimer) to monitor the feedback information sent by the base station. When receiving the data reception success indication sent by the base station (such as the acknowledgement (ACK) information indicated by the physical layer downlink control information (DCI), it is determined that the confirmation information for initially sent data from the base station is received.

In addition, in an embodiment of the present disclosure, if the service process types of the SDT services are different, the processes of the base station sending the SDT resource configuration are also different.

Specifically, in an embodiment of the present disclosure, if the service process type of the SDT service is the 4-step RACH SDT service process or the 4-step RACH SDT service process, the UE may obtain the SDT resource configuration sent by the base station via the system message.

In another embodiment of the present disclosure, if the service process type of the SDT service is the CG SDT service process, the UE may obtain the SDT resource configuration sent by the base station via a paging radio resource control (RRC) release message.

Based on the above-mentioned content, in an embodiment of the present disclosure, after the UE receives the SDT resource configuration sent by the base station, it may follow at least one of the service process type of the SDT service, the bearing type corresponding to the SDT service, and the bearing identifier corresponding to the SDT service and the performing phase corresponding to the SDT service to perform the SDT service.

Based on the above-mentioned content, in an embodiment of the present disclosure, after the UE receives the SDT resource configuration sent by the base station, it may follow at least one of the service process type of the SDT service, the bearing type corresponding to the SDT service, and the bearing identifier corresponding to the SDT service and the performing phase corresponding to the SDT service to perform the SDT service.

In step 902, a SDT service is performed.

To sum up, in the method for controlling the service provided by embodiments of the present disclosure, the base station sends the priority configuration information to the UE, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

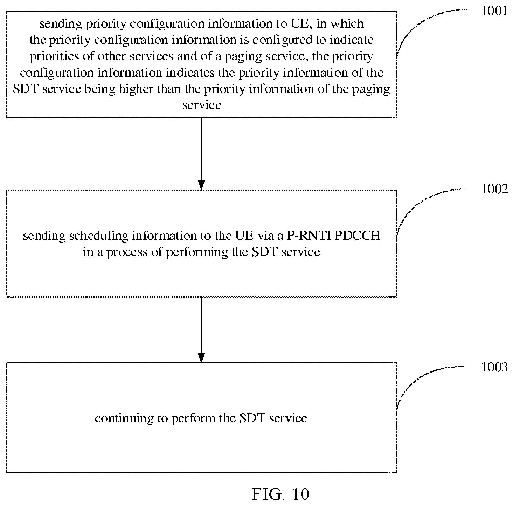

FIG. 10 is a schematic flowchart of a method for controlling a service provided by an embodiment of the present disclosure. The method is performed by a base station. As shown in FIG. 10, the method for controlling the service may include the following steps.

In step 1001, priority configuration information is sent to the UE. The priority configuration information is configured to indicate priorities of other services and of a paging. The priority configuration information is configured to indicate priority information of the SDT service being higher than the priority information of the paging service.

In step 1002, in a process of performing the SDT service, scheduling information is sent to the UE via the P-RNTI PDCCH.

In an embodiment of the present disclosure, the scheduling information may be configured to indicate the UE to receive messages in the PDSCH. In an embodiment of the present disclosure, the scheduling information may be configured to indicate the UE to receive a paging RRC message for triggering the paging service. In another embodiment of the present disclosure, the scheduling information may not indicate the UE to receive a short message.

For a detailed introduction to the short message and the paging RRC message, reference may be made on the description of the above-mentioned embodiments, and embodiments of the present disclosure will not be described again here.

In step 1003, it continues to perform the SDT service.

To sum up, in the method for controlling the service provided by embodiments of the present disclosure, the base station sends the priority configuration information to the UE, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

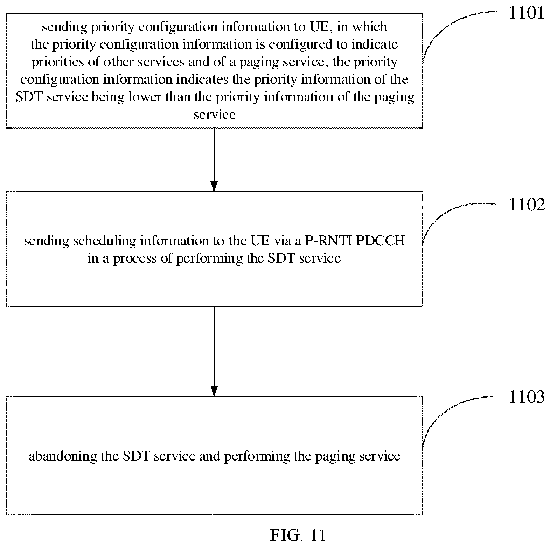

FIG. 11 is a schematic flowchart of a method for controlling a service provided by an embodiment of the present disclosure. The method is performed by a base station. As shown in FIG. 11, the method for controlling the service may include the following steps.

In step 1101, priority configuration information is sent to the UE. The priority configuration information is configured to indicate priorities of a SDT service and of other services. The priority configuration information indicates the priority information of the SDT service being lower than priority information of the paging service.

In step 1102, in a process of performing the SDT service, scheduling information is sent to the UE via a P-RNTI PDCCH.

In step 1103, the SDT service is abandoned and the paging service is performed.

Regarding steps 1101 to 1103, reference may be made on the above-mentioned description, and the embodiments of the present disclosure will not be repeated here.

To sum up, in the method for controlling the service provided by embodiments of the present disclosure, the base station sends the priority configuration information to the UE, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

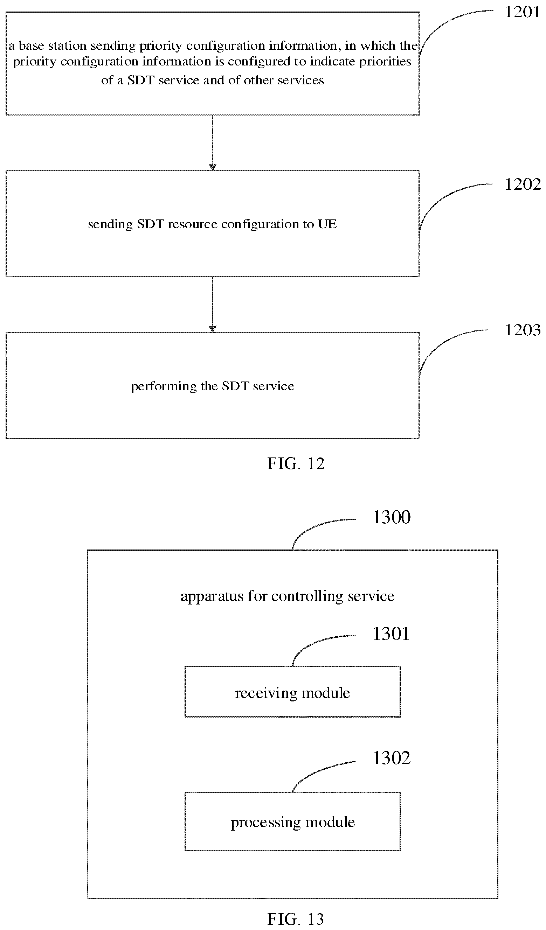

FIG. 12 is a schematic flowchart of a method for controlling a service provided by an embodiment of the present disclosure. The method is performed by a base station. As shown in FIG. 12, the method for controlling the service may include the following steps.

In step 1201, priority configuration information is sent to the UE. The priority configuration information is configured to indicate priorities of a SDT service and of other services.

In step 1202, SDT resource configuration is sent to the UE.

In step 1203, the SDT service is performed.

Regarding steps 1201 to 1203, reference may be made on the above-mentioned description, and the embodiments of the present disclosure will not be repeated here.

To sum up, in the method for controlling the service provided by embodiments of the present disclosure, the base station sends the priority configuration information to the UE, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

FIG. 13 is a schematic diagram of an apparatus 1300 for receiving a signal provided by an embodiment of the present disclosure, applied to UE. As shown in FIG. 13, the apparatus 1300 for receiving the signal may include:
A receiving module 1301 configured to obtain priority configuration information, in which the priority configuration information is configured to indicate priorities of a small data transmission (SDT) service and of other services; and
a processing module 1302 configured to determine a scheduling indication sent by a base station for scheduling the other services in a process of performing the SDT service.

The processing module 1302 is further configured to determine whether to continue performing the SDT service based on the priority configuration information and the scheduling indication.

To sum up, the apparatus for receiving the information provided in embodiments of the present disclosure, the UE obtains the priority configuration information sent by the base station, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

Alternatively, in an embodiment of the present disclosure, the other services include a paging service.

Alternatively, in an embodiment of the present disclosure, the processing module is further configured to:
receive the scheduling information sent by the base station via a paging radio network temporary identity physical downlink control channel (P-RNTI PDCCH), in which the scheduling information is configured to indicate the UE to receive messages in a physical downlink shared channel (PDSCH);
determine the scheduling information as a scheduling indication sent by the base station for scheduling the other services in case that the scheduling information indicates the UE to receive a paging radio resource control (RRC) message for triggering the paging service in the PDSCH.

Alternatively, in an embodiment of the present disclosure, the processing module is further configured to:
receive the scheduling information sent by the base station via a P-RNTI PDCCH, in which the scheduling information is configured to indicate the UE to receive messages in a PDSCH;
determine the scheduling information as a scheduling indication sent by the base station for scheduling the other services in case the scheduling information does not indicate the UE to receive a short message in the PDSCH.

Alternatively, in an embodiment of the present disclosure, the scheduling information includes downlink control information (DCI).

Alternatively, in an embodiment of the present disclosure, the priority configuration information includes: priority information of the SDT service being different from priority information of the paging service.

Alternatively, in an embodiment of the present disclosure, the processing module is further configured to:
ignore a reception in the PDSCH indicated by the scheduling indication.

Alternatively, in an embodiment of the present disclosure, the processing module is further configured to:
receive the paging RRC message in the PDSCH based on the scheduling indication;
ignore the paging RRC message received.

Alternatively, in an embodiment of the present disclosure, the processing module is further configured to:
receive the paging RRC message in the PDSCH based on the scheduling indication;
ignore the paging RRC message received in case that the paging RRC message indicates an identifier of the UE.

Alternatively, in an embodiment of the present disclosure, the processing module is further configured to:
receive the paging RRC message in the PDSCH based on the scheduling indication;
ignore the paging service triggered by the UE based on the paging RRC message in case that the paging RRC message indicates an identifier of the UE.

Alternatively, receive the paging RRC message in the PDSCH based on the scheduling indication;
abandon the SDT service, and trigger the paging service based on the paging RRC message in case that the paging RRC message indicates an identifier of the UE.

Alternatively, in an embodiment of the present disclosure, the receiving module is further configured to:
receive the priority configuration information sent by the base station.

Alternatively, in an embodiment of the present disclosure, the receiving module is further configured to:
determine the priority configuration information based on a protocol.

Alternatively, in an embodiment of the present disclosure, the SDT service includes at least one of the following:
4-step random access channel (4-step RACH) SDT;
2-step random access channel (2-step RACH) SDT; or
configure grant (CG) SDT.

Alternatively, in an embodiment of the present disclosure, the bearer type corresponding to the SDT service includes at least one of the following:
a data radio bearer (DRB);
a signaling radio bearer (SRB);
a master cell group radio bearer (MCGRB);
a secondary cell group radio bearer (SCGRB); or
a split bear.

Alternatively, in an embodiment of the present disclosure, a bearing identifier corresponding to the SDT service includes at least one of the following:
DRB-1; or
SRB-1.

Alternatively, in an embodiment of the present disclosure, a performing phase corresponding to the SDT service includes at least one of:
an initial data sending phase including starting from triggering the SDT service to initially send data to receiving confirmation information for initially sent data from the base station;
a subsequent data sending phase including starting from receiving the confirmation information for initially sent data from the base station to receiving a connection release message sent by the base station.

Alternatively, in an embodiment of the present disclosure, the apparatus is further configured to:
receive a SDT resource configuration sent by the base station;
perform the SDT service based on the SDT resource configuration.

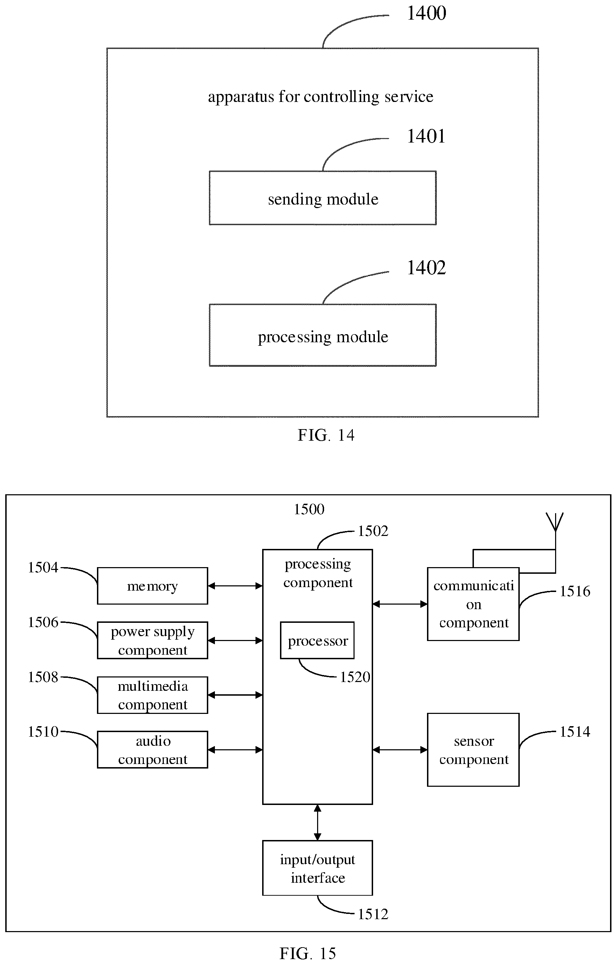

FIG. 14 is a schematic diagram of an apparatus 1400 for receiving information provided by an embodiment of the present disclosure, which is applied to a base station. As shown in FIG. 14, the apparatus 1400 for receiving the information may include:
a sending module 1401 configured to send priority configuration information to a user equipment (UE), in which the priority configuration information is configured to indicate priorities of a small data transmission (SDT) service and of other services;
a processing module 1402 configured to perform the SDT service.

To sum up, in the apparatus for receiving the information provided in embodiments of the present disclosure, the base station sends the priority configuration information to the UE, and the priority configuration information is configured to indicate the priorities of the SDT service and of other services. Afterwards, in the process of UE performing the SDT service, when the UE determines that it has received the scheduling indication sent by the base station for scheduling other services, the UE will determine whether to continue performing the SDT service based on the priority configuration information and the scheduling indication. That is to say, in embodiments of the present disclosure, the priority configuration information indicating the priority of the SDT service and other services will be pre-configured, and when the SDT service conflicts with other services, a service with a higher priority will be performed first, so that the higher-priority service processes may be retained and data loss of high-priority service may be avoided.

Alternatively, in an embodiment of the present disclosure, the other services include a paging service.

Alternatively, in an embodiment of the present disclosure, the apparatus is further configured to:
send scheduling information to a UE via a paging radio network temporary identity physical downlink control channel (P-RNTI PDCCH), in which the scheduling information indicates the UE to receive a paging RRC message for triggering the paging service in a physical downlink shared channel (PDSCH).

Alternatively, in an embodiment of the present disclosure, the apparatus is further configured to:
send scheduling information to a UE via a P-RNTI PDCCH, in which the scheduling information does not indicate the UE to receive a short message in the PDSCH.

Alternatively, in an embodiment of the present disclosure, the scheduling information includes DCI.

Alternatively, in an embodiment of the present disclosure, the priority configuration information includes: a priority of the SDT service being higher than a priority of the paging service

Alternatively, in an embodiment of the present disclosure, the apparatus is further configured to:
continue to perform the SDT service.

Alternatively, in an embodiment of the present disclosure, the priority configuration information includes: priority information of the SDT service being different from priority information of the paging service.

Alternatively, in an embodiment of the present disclosure, the apparatus is further configured to:
abandon the SDT service and perform the paging service.

Alternatively, in an embodiment of the present disclosure, the SDT service includes at least one of the following:
a 4-step RACH SDT;
a 2-step RACH SDT;
a CG SDT.

Alternatively, in an embodiment of the present disclosure, the bearing type corresponding to the SDT service includes at least one of the following:
DRB;
SRB;
MCGRB;
SCGRB;
a split bear.

Alternatively, in an embodiment of the present disclosure, the bearing identifier corresponding to the SDT service includes at least one of the following:
DRB-1;
SRB-1.

Alternatively, in an embodiment of the present disclosure, the performing phase corresponding to the SDT service includes at least one of the following:
an initial data sending phase including starting from triggering the SDT service to initially send data to receiving confirmation information for initially sent data from the base station;
a subsequent data sending phase including starting from receiving the confirmation information for initially sent data from the base station to receiving a connection release message sent by the base station.

Alternatively, in an embodiment of the present disclosure, the apparatus is configured to:
send SDT resource configuration to the UE.

In order to implement the above-mentioned embodiments, the present disclosure also provides a computer program product including a computer program. When the computer program is executed by a processor, the method according to any one of embodiments in FIGS 1 to 8, or FIGS 9 to 12 is implemented.

In addition, in order to implement the above-mentioned embodiments, the present disclosure also provides a computer program. When the computer program is executed by a processor, the method according to any one of embodiments in FIGS 1 to 8, or FIGS 9 to 12 is implemented.

FIG. 15 is a block diagram of a user equipment (UE) 1500 provided by an embodiment of the present disclosure. For example, the UE 1500 may be a mobile phone, a computer, a digital broadcast user equipment, a messaging device, a gaming console, a tablet device, a medical device, a fitness device, a personal digital assistant, or the like.

Referring to FIG. 15, the UE 1500 may include at least one of the following components: a processing component 1502, a memory 1504, a power supply component 1506, a multimedia component 1508, an audio component 1510, an input/output (I/O) interface 1512, a sensor component 1513, and a communication component 1516.

The processing component 1502 generally controls the overall operations of the UE 1500, such as the operations associated with display, telephone calls, data communications, camera operations, and recording operations. The processing component 1502 may include at least one processor 1520 to execute instructions to complete all or part of the steps of the above-mentioned method. Additionally, the processing component 1502 may include at least one module that facilitate interaction between the processing component 1502 and other components. For example, the processing component 1502 may include a multimedia module to facilitate the interaction between the multimedia component 1508 and the processing component 15022.

The memory 1504 is configured to store various types of data to support the operations at the UE 1500. Examples of such data include instructions for any application or method operated on the UE 1500, contact data, phonebook data, messages, pictures, videos, etc. The memory 1504 may be implemented by using any type of volatile or non-volatile storage device, or a combination thereof, such as static random access memory (SRAM), an electrically erasable programmable read-only memory (EEPROM), an erasable programmable read-only memory (EPROM), a programmable read only memory (PROM), a read-only memory (ROM), a magnetic memory, a flash memory, a magnetic or optical disk.

The power supply component 1506 provides power to various components of the UE 1500. The power supply components 1506 may include a power management system, at least one power supply, and any other components associated with the generation, management, and distribution of power tin the UE 1500.

The multimedia component 1508 includes a screen that provides an output interface between the UE 1500 and the user. In some embodiments, the screen may include a liquid crystal display (LCD) and a touch panel (TP). If the screen includes a touch panel, the screen may be implemented as a touch screen to receive input signals from the user. The touch panel includes at least one touch sensor to sense touches, swipes, and gestures on the touch panel. The touch sensor may not only sense a boundary of a touch or a swipe operation, but also sense awake time and a pressure associated with the touch or the swipe operation. In some embodiments, the multimedia component 1508 includes a front camera and/or a rear camera. The front camera and/or the rear camera may receive an external multimedia data while the UE 1500 is in an operation mode, such as a photographing mode or a video mode. Each of the front camera and rear camera may be a fixed optical lens system or have a focal length and optical zoom capability.

The audio component 1510 is configured to output and/or input audio signals. For example, the audio component 1510 includes a microphone (MIC) configured to receive external audio signals when the UE 1500 is in an operation mode, such as a call mode, a recording mode, and a voice recognition mode. The received audio signals may be further stored in the memory 1504 or transmitted via communication component 1516. In some embodiments, the audio component 1510 further includes a speaker to output audio signals.

The I/O interface 1512 provides an interface between the processing component 1502 and a peripheral interface module, which may be a keyboard, a click wheel, a button, etc. These buttons may include, but are not limited to, a home button, a volume button, a starting button, and a locking button.

The sensor component 1513 includes at least one sensor to provide status assessments of various aspects of the UE 1500. For example, the sensor component 1513 may detect an open/closed status of the UE 1500, relative positioning of components, such as the display and keypad of the UE 1500, a change in position of the UE 1500 or a component of the UE 1500, a presence or absence of user contact with the UE 1500, an orientation or an acceleration/deceleration of the UE 1500, and a change in temperature of the UE 1500. The sensor component 1513 may include a proximity sensor configured to detect the presence of nearby objects without any physical contact. The sensor component 1513 may also include a light sensor, such as a CMOS or CCD image sensor, for use in imaging applications. In some embodiments, the sensor component 1513 may also include an acceleration sensor, a gyroscope sensor, a magnetic sensor, a pressure sensor, or a temperature sensor.

The communication component 1516 is configured to facilitate communication, wired or wireless, between the UE 1500 and other devices. The UE 1500 may access a wireless network based on a communication standard, such as WiFi, 2G or 3G, or a combination thereof. In one illustrative embodiment, the communication component 1516 receives a broadcast signal or broadcast related information from an external broadcast management system via a broadcast channel. In one illustrative embodiment, the communication component 1516 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology and other technologies.

In an illustrative embodiment, the UE 1500 may be configured by at least one application specific integrated circuit (ASIC), digital signal processor (DSP), digital signal processing device (DSPD), programmable logic device (PLD), field programmable gate array (FPGA), controller, microcontroller, microprocessor or other electronic components to be implemented for executing the above-mentioned method.

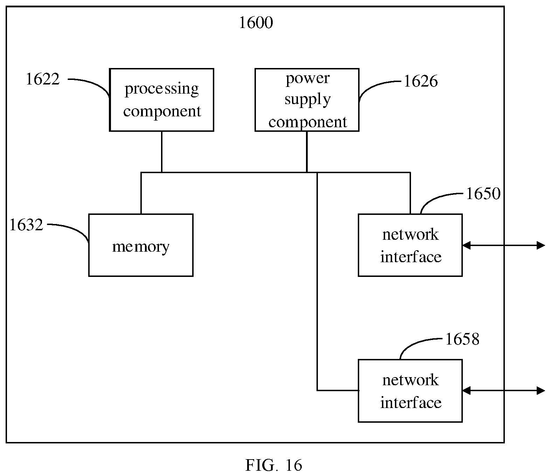

FIG. 16 is a block diagram of a base station 1600 provided by an embodiment of the present disclosure. For example, the base station 1600 may be provided as a base station. Referring to FIG. 16, the base station 1600 includes a processing component 1611, which further includes at least one processor, and memory resources represented by a memory 1632 for storing instructions, such as application programs, executable by the processing component 1622. The application program stored in the memory 1632 may include one or more modules, and each of them corresponds to a set of instructions. In addition, the processing component 1615 is configured to execute the instructions to perform any one of the above-mentioned methods applied to the base station, for example, the methods shown in FIG. 1.

The base station 1600 may also include a power supply component 1626 configured to perform power management of the base station 1600, a wired or wireless network interface 1650 configured to connect the base station 1600 to a network, and an input/output (I/O) interface 1658. The base station 1600 may operate based on an operating system stored in the memory 1632, such as Windows Server^{™}, Mac OS X^{™}, Unix^{™}, Linux^{™}, FreeBSD^{™} or the like.

In the above-mentioned embodiments provided by the present disclosure, the methods provided by embodiments of the present disclosure are introduced from the perspectives of the base stations and the UEs respectively. In order to implement the functions in the methods provided by the above-mentioned embodiments of the present disclosure, the base station and the UE may include hardware structures and software modules to implement the above-mentioned functions in the form of hardware structures, software modules, or hardware structures plus software modules. A certain function among the above functions may be executed by a hardware structure, a software module, or a hardware structure and a software module.

In the above-mentioned embodiments provided by the present disclosure, the methods provided by embodiments of the present disclosure are introduced from the perspectives of the base stations and the UEs respectively. In order to implement the functions in the methods provided by the above-mentioned embodiments of the present disclosure, the base station and the UE may include hardware structures and software modules to implement the above-mentioned functions in the form of hardware structures, software modules, or hardware structures plus software modules. A certain function in the above-mentioned functions may be executed by a hardware structure, a software module, or a hardware structure and a software module.

Embodiments of the present disclosure provide a communication device. The communication device may include a transceiver module and a processing module. The transceiver module may include a sending module and/or a receiving module. The sending module is configured to implement the sending function, and the receiving module is configured to implement the receiving function. The transceiver module may implement the sending function and/or the receiving function.

The communication device may be a terminal device (such as the terminal device in the above-mentioned method embodiments), a device in the terminal device, or a device that may be used in conjunction with the terminal device. Alternatively, the communication device may be a network device, a device in a network device, or a device that may be used in conjunction with the network device.

Embodiments of the present disclosure also provide another communication device. The communication device may be a network device, or may be a terminal device (such as the terminal device in the above-mentioned method embodiments), or may be a chip, a chip system, or a processor that supports the network device to implement the above-mentioned method, or a chip, a chip system, or a processor that supports the terminal device to implement the above-mentioned method. The device may be used to implement the method described in the above-mentioned method embodiments. For details, reference may be made on the description in the above-mentioned method embodiments.

The communication device may include one or more processors. The processor may be a general-purpose processor or a special-purpose processor, etc. For example, it may be a baseband processor or a central processing unit. The baseband processor may be used to process communication protocols and communication data. The central processor may be used to control communication devices (such as base stations, baseband chips, user equipment, user equipment chips, DU or CU, etc.) and execute computer programs and processing data for computer programs.

Alternatively, the communication device may also include one or more memories, on which a computer program may be stored, and the processor executes the computer program, so that the communication device executes the method described in the above method embodiments. Alternatively, data may also be stored in the memory. The communication device and the memory may be provided separately or integrated together.

Alternatively, the communication device may also include a transceiver and an antenna. The transceiver may be called a transceiver unit, a transceiver, or a transceiver circuit, etc., and configured to implement transceiver functions. The transceiver may include a receiver and a transmitter. The receiver may be called a receiver or a receiving circuit, etc., and configured to implement the receiving function. The transmitter may be called a transmitter or a transmitting circuit, etc., and configured to implement the transmitting function.

Alternatively, the communication device may also include one or more interface circuits. The interface circuitry is configured to receive code instructions and transmit them to a processor. The processor executes the code instructions to cause the communication device to perform the method described in any of the above-mentioned method embodiments.

The communication device is a terminal device (such as the terminal device in the above-mentioned method embodiments), and the processor is configured to perform the method according to any one of FIG. 1 to FIG. 4.

The communication device is a network device, and the transceiver is configured to perform the method according to any one of FIG. 5 to FIG. 8.

In one implementation, a transceiver for implementing receiving and transmitting functions may be included in the processor. For example, the transceiver may be a transceiver circuit, an interface, or an interface circuit. The transceiver circuits, the interfaces or the interface circuits configured to implement the receiving and transmitting functions may be separate or integrated together. The above-mentioned transceiver circuit, the interface or the interface circuit may be configured for reading and writing codes/data, or the above-mentioned transceiver circuit, the interface or the interface circuit may be configured for signal transmission or transfer.

In one implementation, the processor may store a computer program, and the computer program runs on the processor, causing the communication device to perform the method described in any of the above-mentioned method embodiments. The computer program may be embedded in the processor, in which case the processor may be implemented in hardware.

In one implementation, the communication device may include a circuit, and the circuit may implement sending or receiving or communication functions in the above-mentioned method embodiments. The processor and transceiver described in the present disclosure may be implemented in an integrated circuits (IC), an analog IC, a radio frequency integrated circuits (RFIC), a mixed signal (IC), an application specific integrated circuits (ASIC), a printed circuit boards (PCB), electronic equipment, etc. The processor and the transceiver may also be manufactured using various IC process technologies, such as a complementary metal oxide semiconductor (CMOS), a N-type metal-oxide-semiconductor (NMOS), a P-type metal oxide semiconductor (PMOS), a bipolar junction transistor (BJT), a bipolar CMOS (BiCMOS), a silicon germanium (SiGe), a gallium arsenide (GaAs), etc.

The communication device described in the above-mentioned embodiments may be a network device or a user equipment (such as the terminal device in the above-mentioned method embodiments), but the scope of the communication device described in the present disclosure is not limited thereto, and the structure of the communication device is not limited thereto. The communication device may be a stand-alone device or may be part of a larger device. For example, the communication device may be:
(1) independent integrated circuit (IC), or chip, or chip system or subsystem;
(2) a collection of one or more ICs, or, the IC collection may also include storage components for storing data and computer programs;
(3) ASIC, such as modem;
(4) modules that may be embedded in other devices;
(5) receivers, terminal device, intelligent terminal device, cellular phones, wireless equipment, handheld devices, mobile units, vehicle-mounted equipment, network device, cloud equipment, artificial intelligence equipment, etc.;
(6) others.

In case that the communication device is a chip or a system on a chip, the chip includes a processor and an interface. The number of processors may be one or more, and the number of interfaces may be multiple.

Alternatively, the chip also includes a memory, which is configured to store necessary computer programs and data.

Those skilled in the art may also understand that the various illustrative logical blocks and steps listed in embodiments of the present disclosure may be implemented by electronic hardware, computer software, or a combination of both. Whether such functionality is implemented in hardware or software depends on the specific application and overall system design requirements. Those skilled in the art may use various methods to implement the functions for each specific application, but such implementation should not be understood as exceeding the scope of protection of embodiments of the present disclosure.

Embodiments of the present disclosure also provide a system for determining side link duration. The system includes a communication device as a terminal device in the above-mentioned embodiment (such as the first terminal device in the above-mentioned method embodiments) and a communication device as a network device. Alternatively, the system includes a communication device as a terminal device in the above-mentioned embodiment (such as the first terminal device in the foregoing method embodiment) and a communication device as a network device.

The present disclosure also provides a readable storage medium on which instructions are stored, and when the instructions are executed by a computer, the functions of any of the above-mentioned method embodiments are implemented.

The present disclosure also provides a computer program product. When the computer program product is executed by a computer, the functions of any of the above-mentioned method embodiments are implemented.

In the above-mentioned embodiments, it may be implemented in whole or in part by software, hardware, firmware, or any combination thereof. When implemented using software, it may be implemented in whole or in part in the form of a computer program product. A computer program product includes one or more computer programs. When a computer program is loaded and executed on a computer, processes or functions according to embodiments of the present disclosure are generated in whole or in part. The computer may be a general purpose computer, a special purpose computer, a computer network, or other programmable device. The computer program may be stored in or transmitted from one computer-readable storage medium to another computer-readable storage medium, for example, the computer program may be transmitted from a website, a computer, a server or a data center via a wireline (e.g. coaxial cable, optical fiber, digital subscriber line (DSL)) or wireless (such as infrared, wireless, microwave, etc.) means to transmit to another website, computer, server or data center. The computer-readable storage media may be any available media that may be accessed by a computer or a data storage device such as a server, data center, or other integrated media that contains one or more available media. The usable media may be magnetic media (e.g., floppy disks, hard disks, tapes), optical media (e.g., high-density digital video discs (DVDs)), or semiconductor media (e.g., solid state disks (SSDs)) and the like.

Those skilled in the art may understand that the first, second, and other numerical numbers involved in the present disclosure are only for convenience of description and are not used to limit the scope of embodiments of the present disclosure and also indicate the order.

At least one in the present disclosure may also be described as one or more, and the plurality may be two, three, four or more, and the present disclosure is not limited. In embodiments of the present disclosure, for a technical feature, the technical feature is distinguished by "first", "second", "third", "A", "B", "C" and "D", etc. The technical features described in "first", "second", "third", "A", "B", "C" and "D" are in no particular order or order.

Other embodiments of the present disclosure will be apparent to those skilled in the art from consideration of the specification and practice of the disclosure disclosed here. The present disclosure is intended to cover any variations, uses, or adaptations of the disclosure following the general principles thereof and including such departures from the disclosure as come within known or customary practice in the art. It is intended that the specification and examples be considered as illustrative only, and the scope and spirit of the present disclosure are indicated by the attached claims.

It will be appreciated that the present disclosure is not limited to the exact construction that has been described above and illustrated in the accompanying drawings, and that various modifications and changes may be made without departing from the scope thereof. The scope of the present disclosure is limited only by the attached claims.

## Claims

1. A method for controlling a service, performed by a user equipment (UE) and comprising:
obtaining priority configuration information, wherein the priority configuration information is configured to indicate priorities of a small data transmission (SDT) service and of other services;
determining a scheduling indication sent by a base station for scheduling the other services in a process of performing the SDT service; and
determining whether to continue performing the SDT service based on the priority configuration information and the scheduling indication.

2. The method according to claim 1, wherein the other services comprise a paging service.

3. The method according to claim 2, wherein determining the scheduling indication sent by the base station for scheduling the other services comprises:
receiving the scheduling information sent by the base station via a paging radio network temporary identity physical downlink control channel (P-RNTI PDCCH), wherein the scheduling information is configured to indicate the UE to receive messages in a physical downlink shared channel (PDSCH); and
determining the scheduling information as a scheduling indication sent by the base station for scheduling the other services in case that the scheduling information indicates the UE to receive a paging radio resource control (RRC) message for triggering the paging service in the PDSCH.

4. The method according to claim 2, wherein determining the scheduling indication sent by the base station for scheduling the other services comprises:
receiving the scheduling information sent by the base station via a P-RNTI PDCCH, wherein the scheduling information is configured to indicate the UE to receive messages in a PDSCH; and
determining the scheduling information as a scheduling indication sent by the base station for scheduling the other services in case the scheduling information does not indicate the UE to receive a short message in the PDSCH.

5. The method according to claim 3 or 4, wherein the scheduling information comprises downlink control information (DCI).

6. The method according to claim 3 or 4, wherein the priority configuration information comprises: priority information of the SDT service being different from priority information of the paging service.

7. The method according to claim 6, wherein determining whether to continue performing the SDT service based on the priority configuration information and the scheduling indication comprises:
ignoring a reception in the PDSCH indicated by the scheduling indication.

8. The method according to claim 6, wherein determining whether to continue performing the SDT service based on the priority configuration information and the scheduling indication comprises:
receiving the paging RRC message in the PDSCH based on the scheduling indication; and
ignoring the paging RRC message received.

9. The method according to claim 6, wherein determining whether to continue performing the SDT service based on the priority configuration information and the scheduling indication comprises:
receiving the paging RRC message in the PDSCH based on the scheduling indication; and
ignoring the paging RRC message received in case that the paging RRC message indicates an identifier of the UE.

10. The method according to claim 6, wherein determining whether to continue performing the SDT service based on the priority configuration information and the scheduling indication comprises:
receiving the paging RRC message in the PDSCH based on the scheduling indication; and
ignoring the paging service triggered by the UE based on the paging RRC message in case that the paging RRC message indicates an identifier of the UE.

11. The method according to claim 6, wherein determining whether to continue performing the SDT service based on the priority configuration information and the scheduling indication comprises:
receiving the paging RRC message in the PDSCH based on the scheduling indication; and
abandoning the SDT service, and triggering the paging service based on the paging RRC message in case that the paging RRC message indicates an identifier of the UE.

12. The method according to claim 1, wherein obtaining the priority configuration information comprises:
receiving the priority configuration information sent by the base station.

13. The method according to claim 1, wherein obtaining the priority configuration information comprises:
determining the priority configuration information based on a protocol.

14. The method according to claim 1, wherein the SDT service comprises at least one of:
4-step random access channel (4-step RACH) SDT;
2-step random access channel (2-step RACH) SDT; or
configure grant (CG) SDT.

15. The method according to claim 1, wherein a bearing type corresponding to the SDT service comprises at least one of:
a data radio bearer (DRB);
a signaling radio bearer (SRB);
a master cell group radio bearer (MCGRB);
a secondary cell group radio bearer (SCGRB); or
a split bear.

16. The method according to claim 1, wherein a bearing identifier corresponding to the SDT service comprises at least one of:
DRB-1; or
SRB-1.

17. The method according to claim 1, wherein a performing phase corresponding to the SDT service comprises at least one of:
an initial data sending phase comprising starting from triggering the SDT service to initially send data to receiving confirmation information for initially sent data from the base station; or
a subsequent data sending phase comprising starting from receiving the confirmation information for initially sent data from the base station to receiving a connection release message sent by the base station.

18. The method according to claim 1, further comprising:
receiving a SDT resource configuration sent by the base station; and
performing the SDT service based on the SDT resource configuration.

19. A method for controlling a service, performed by a base station and comprising:
sending priority configuration information to a user equipment (UE), wherein the priority configuration information is configured to indicate priorities of a small data transmission (SDT) service and of other services; and
performing the SDT service.

20. The method according to claim 19, wherein the other services comprise a paging service.

21. The method according to claim 20, further comprising:
sending scheduling information to a UE via a paging radio network temporary identity physical downlink control channel (P-RNTI PDCCH), wherein the scheduling information indicates the UE to receive a paging RRC message for triggering the paging service in a physical downlink shared channel (PDSCH).

22. The method according to claim 20, further comprising:
sending scheduling information to a UE via a P-RNTI PDCCH, wherein the scheduling information does not indicate the UE to receive a short message in the PDSCH.

23. The method according to claim 21 or 22, wherein the scheduling information comprises DCI.

24. The method according to claim 20, wherein the priority configuration information comprises: priority information of the SDT service being different from priority information of the paging service.

25. The method according to claim 24, further comprising:
continuing to perform the SDT service.

26. The method according to claim 24, further comprising:
abandoning the SDT service and performing the paging service.

27. The method according to claim 19, wherein the SDT service comprises at least one of:
4-step random access channel (4-step RACH) SDT;
2-step random access channel (2-step RACH) SDT; or
configure grant (CG) SDT.

28. The method according to claim 19, wherein a bearing type corresponding to the SDT service comprises at least one of:
a data radio bearer (DRB);
a signaling radio bearer (SRB);
a master cell group radio bearer (MCGRB);
a secondary cell group radio bearer (SCGRB); or
a split bear.

29. The method according to claim 19, wherein a bearing identifier corresponding to the SDT service comprises at least one of:
DRB-1; or
SRB-1.

30. The method according to claim 19, wherein a performing phase corresponding to the SDT service comprises at least one of:
an initial data sending phase comprising starting from triggering the SDT service to initially send data to receiving confirmation information for initially sent data from the base station; or
a subsequent data sending phase comprising starting from receiving the confirmation information for initially sent data from the base station to receiving a connection release message sent by the base station.

31. The method according to claim 19, further comprising:
sending a SDT resource configuration to the UE.

32. An apparatus for controlling a service, comprising:
a receiving module configured to obtain priority configuration information, wherein the priority configuration information is configured to indicate priorities of a small data transmission (SDT) service and of other services; and
a processing module configured to determine a scheduling indication sent by a base station for scheduling the other services in a process of performing the SDT service;
wherein the processing module is further configured to determine whether to continue performing the SDT service based on the priority configuration information and the scheduling indication.

33. An apparatus for controlling a service, comprising:
a sending module configured to send priority configuration information to a user equipment (UE), wherein the priority configuration information is configured to indicate priorities of a small data transmission (SDT) service and of other services; and
a processing module configured to perform the SDT service.

34. A communication device, comprising:
a processor; and
a memory;
wherein a computer program is stored in the memory, and the processor executes the computer program stored in the memory to cause the device to execute the method according to any one of claims 1 to 18.

35. A communication device, comprising:
a processor; and
a memory;
wherein a computer program is stored in the memory, and the processor executes the computer program stored in the memory to cause the device to execute the method according to any one of claims 19 to 31.

36. A communication device, comprising:
a processor; and
an interface circuit configured to receive code indications and transmit the code indications to the processor;
wherein the processor is configured to run the code indications to perform the method according to any one of claims 1 to 18.

37. A communication device, comprising:
a processor; and
an interface circuit configured to receive code indications and transmit the code indications to the processor;
wherein the processor is configured to run the code indications to perform the method according to any one of claims 19 to 31.

38. A computer-readable storage medium having stored indications that, when executed, cause the method according to any one of claims 1 to 18 to be implemented.

39. A computer-readable storage medium having stored indications that, when executed, cause the method according to any one of claims 19 to 31 to be implemented.
